# EUROPEAN PATENT APPLICATION

(11) **EP 2 067 514 A2**
(43) Date of publication of application: **10.06.2009**
(21) Application number: 08019870.8
(22) Date of filing: 13.11.2008
(51) Int. Cl.: B01D 35/147, B01D 35/153

(54) **Fuel system and fuel filter assembly**

(30) Priority: 03.12.2007 US 949077
(71) Applicant: International Engine Intellectual Property Company, LLC., Warrenville, IL 60555 (US)
(72) Inventor: Dhawale, Samir D., Glendale Heights IL 60139 (US); Dickerson, Steven J., Lake In The Hills IL 60156 (US)
(74) Representative: Kuhnen & Wacker

(57) **Abstract**

A filter assembly (10) for a standpipe (14) having an opening (20) for the introduction of filtered fluid into the standpipe includes a filter (12). The filter (12) has a filter element (18) in fluid communication with the opening (20). The filter (12) is configured to seal fluid from the opening (20) except fluid flowing through the filter element (18). A valve assembly (42) is biased by a spring (46) against a first surface of the filter (12), and the valve assembly has a seal (58) on a surface facing the standpipe (14). As the filter (12) is displaced, the valve assembly (42) displaces along the standpipe (14) under bias of the spring (46) until the seal (58) of the valve assembly seals the opening (20).

## Description

### FIELD OF THE INVENTION

The present invention relates generally to fuel systems and filter assemblies for vehicle engines, and more particularly, to an improved fuel system and an improved filter assembly that simplify filter service/replacement.

### BACKGROUND OF THE INVENTION

Typically, filter assemblies include a filter with a filter element that is disposed around a standpipe. The filter is used to remove dirt and debris from the fuel to prevent the contaminants from entering the standpipe opening, which is the passage for clean fuel to the fuel rail. When the filter elements are spent, the filter assembly must be serviced.

While servicing the filter and/or standpipe, the filter is removed from the standpipe resulting in the standpipe openings being exposed. While the filter is removed during service, there is a tendency by the user to fill the filter housing with fuel, which has dirt and debris that clings to the sides of the standpipe and that can also enter the standpipe openings. If the contaminants enter the standpipe, the contaminants can potentially cause the components of the fuel system to fail. One way to avoid the dirty fuel from dripping onto the standpipe is to evacuate the supply and return fuel lines, however this requires effort by the user and is time consuming.

The filter is located in a filter housing, which forms a chamber around the filter. Frequently, air is trapped in a portion of the chamber that is located between a top plate of the filter and an internal surface of a housing cap. De-aeration can be performed manually, requiring intervention from a user.

Alternatively, an air bleed orifice can be included on the filter. However, a conventional air bleed orifice allows the pressurized fuel to bleed back to the tank, which when the engine is not running, allows the pressure in the chamber to return to atmospheric pressure. Since the pressure is not regulated when the engine is not running, there is a relatively long engine crank-to-start time because the pressure has to build within the system before the engine will start.

### SUMMARY OF THE INVENTION

A filter assembly for a standpipe having an opening for the introduction of filtered fluid into the standpipe includes a filter. The filter has a filter element in fluid communication with the opening. The filter is configured to seal fluid from the opening except fluid flowing through the filter element. A valve assembly is biased by a spring against a first surface of the filter, and the valve assembly has a seal on a surface facing the standpipe. As the filter is displaced, the valve assembly displaces along the standpipe under bias of the spring until the seal of the valve assembly seals the opening.

### BRIEF DESCRIPTION OF THE DRAWINGS

FIG. 1 is a side section view of a filter assembly in accordance with the invention.

FIG. 2 is a circuit diagram of a fuel system in accordance with the invention.

### DESCRIPTION OF A PREFERRED EMBODIMENT

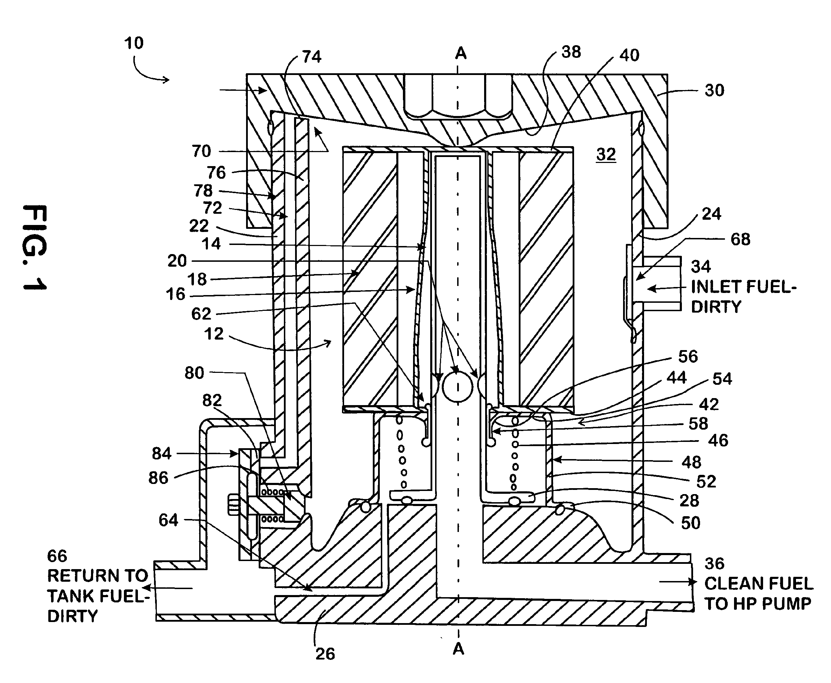

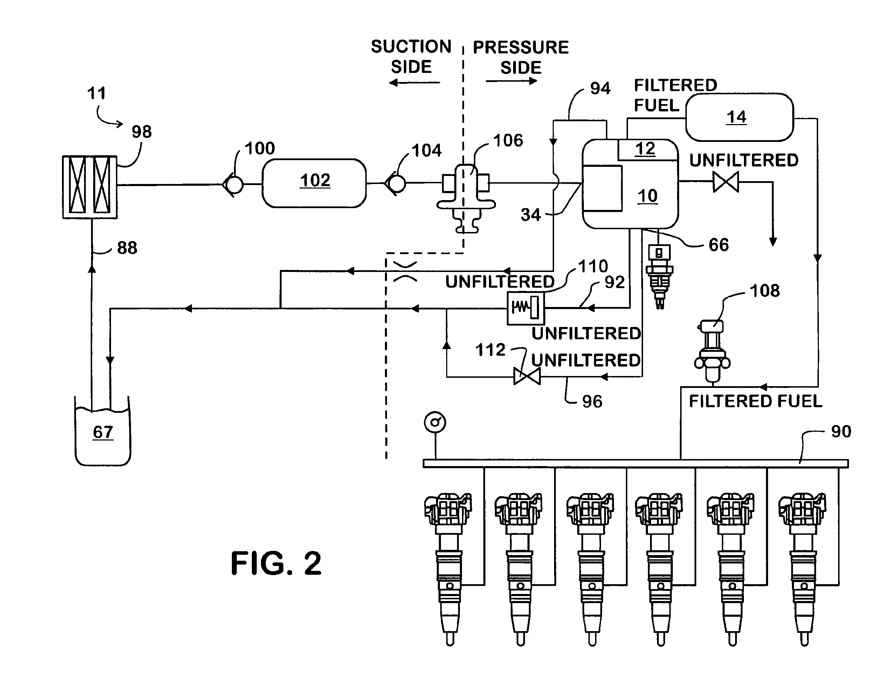

Referring to FIG. 1 and FIG. 2, a filter assembly is indicated generally at 10 and includes a generally cylindrical filter 12 disposed around a generally cylindrical standpipe 14. The filter 12 has a center tube 16 configured to generally circumscribe the standpipe 14, and a filter element 18 disposed about the center tube. The filter 12 is configured to remove dirt and debris from the fuel in fluid communication with openings 20 in the standpipe 14.

The filter 12 is disposed in a housing 22 having a first portion 24 and a second portion 26. An apron 28 of the standpipe 14 sealingly contacts the second portion 26 of the housing 22, and a cap 30 is threadably received by the first portion 24 to form a chamber 32. An inlet 34 is located in the first portion 24 of the housing 22 for receiving fuel, which flows into the chamber 32 and through the filter 12 to the standpipe 14. When the fuel reaches the standpipe openings 20, the contaminants are removed by the filter element 18. The fuel then flows through the standpipe 14 and out an outlet 36.

An internal surface 38 of the cap 30 contacts a first plate 40 of the filter 12, while a valve assembly 42 contacts a second plate 44 on the opposite side of the filter 12. The valve assembly 42 is biased by a spring 46 that pushes the filter 12 along the axis "A" of the standpipe 14 and into engagement with the cap 30.

Advantageously, the valve assembly 42 includes a valve member 48 having a first component 50 sealingly contacting the second portion 26 of the housing 22, a second component 52 extending generally perpendicular to the first component, a third component 54 in engagement with the second plate 44 of the filter 12 and generally perpendicular to the second component, and a fourth component 56 generally parallel with and sealingly contacting the standpipe 14. The spring 46 is disposed between the second component 52 and the fourth component 56, and generally circumscribes the standpipe 14.

In a conventional filter assembly, when the filter is removed from the standpipe for servicing, the filter is no longer in place to prevent dirty fuel from entering the standpipe openings. In the filter assembly 10, as the filter 12 is removed from the standpipe 14, the valve assembly 42 slides along the standpipe 14 under bias of the spring 46 until the fourth component 56 of the valve assembly 42 covers the standpipe openings 20. Advantageously, a molded dynamic seal 58 is disposed on an inner surface of the fourth component 56 for sealing the standpipe openings 20, however other configurations are contemplated. An additional seal 62 is disposed on the second plate 44 where the second plate contacts the standpipe 14 and the valve assembly 42, which prevents unfiltered fuel from contacting the standpipe in the vicinity of the standpipe openings 20.

When the valve assembly 42 seals the standpipe openings 20, the first component 50 of the valve member 48 is displaced away from and out of sealing engagement with the second portion 26 of the housing 22. In the unseated position, a passage 64 is opened to allow fuel to drain out of an outlet 66 to return to a fuel tank 67. With the filter assembly 10, fuel will not flow to the outlet 36 and the engine will not run without the filter 12 being in place about the standpipe openings 20.

During filter 12 installation about the standpipe 14, the inner seal 62 on the center tube and the second plate 44 slides along the standpipe 14 and scrapes away any dirt or debris stuck on the standpipe. As the filter 12 is installed, the second plate 44 pushes against the bias of the spring 46 of the valve assembly 42 until the first component 50 is seated on the second portion 26 of the housing 22. The cap 30 is threadably attached to the housing 22 and the internal surface 38 contacts the filter 12 to ensure sealing of the filter, the valve assembly 42, the standpipe 14 and the housing 22 to prevent unfiltered fuel from reaching the standpipe openings 20.

A check valve 68 is provided at the inlet 34 located in the first portion 24 of the housing 22. Also located on the first portion 24 of the housing 22 is an air bleed orifice 70 that is in fluid communication with an air bleed passageway 72. The air bleed orifice 70 is formed by the internal cap surface 38 and a distal surface 74 of an inner housing member 76, and the air bleed passageway 72 is formed between the inner housing member and an outer housing member 78. The outer housing member 78 is generally parallel to the inner housing member 76.

At the end of the air bleed passageway 72 is a regulator valve 80 with a seal 82. Advantageously, the regulator valve 80 includes a plate 84 having the seal 82 integral with the plate, where the plate is biased by a spring 86 against both the second portion 26, the inner housing member 76 and the outer housing member 78 to seal the air bleed passageway 72.

When the engine is not running, the seal 82 is configured to seal the air bleed passageway 72 from the outlet 66 that returns fuel to the tank 67. When the engine is running, the pressure developed in the filter assembly 10 opens the regulator valve 80 against the bias of the spring 86 to let the air bleed through the air bleed passageway 72 to the outlet 66. The air bleed passageway 72 efficiently and automatically removes air from a fuel system 11 during engine startup, such as after servicing/replacing the fuel filter 12.

Together, the check valve 68 and the regulator valve 80 prevent fuel from exiting the housing 22. Further, the check valve 68 and the regulator valve 80 maintain the pressure in the housing 22 above atmospheric pressure when the engine is not running. When the higher fuel pressure is maintained, there is a quicker crank-to-start time in the fuel system than in a conventional system where the pressure has to build within the system. Additionally, the higher fuel pressure gets released during removal of the filter 12 when the passage 64 is opened to drain the fuel out the outlet 66 back to the tank 67.

Referring to FIG. 2, a circuit diagram of the fuel system 11 is shown. The fuel system 11 includes a fuel supply circuit 88 for delivering fuel from the tank 67 to a fuel rail (and/or engine) 90, a fuel return circuit 92 for returning fuel from the fuel filter assembly 10 to the tank 67, a fuel air bleed circuit 94 for bleeding air from the fuel filter assembly 10, and a drain-to-tank circuit 96 for draining fuel from the fuel filter assembly 10 to the tank 67.

The fuel supply circuit 88 includes a fuel strainer 98, a first check valve 100, a primer pump 102, and a second check valve 104 upstream of a fuel pump 106. From the fuel pump, the pressurized fuel enters the fuel filter assembly 10 and is filtered at the fuel filter 12. The filtered fuel flows through the standpipe 14 and exits the outlet 36 to flow to the fuel rail 90. Advantageously, a fuel pressure sensor 108 senses the pressure of the fuel before it reaches the fuel rail 90.

When the fuel pressure in the fuel system 11 exceeds a predetermined amount, for example 66 +/- 5 pounds per square inch (psi), a fuel pressure regulator valve 110 opens to return excess unfiltered fuel to the fuel tank 67 along the return circuit 92. It is contemplated that other predetermined pressures can be used.

The drain-to-tank circuit 96 includes the passage 64, which is automatically opened during service/replacement of the filter 12, to allow unfiltered fuel to drain out of an outlet 66 to return to a fuel tank 67. The drain-to-tank circuit 96 is operable without pressure built up in the fuel system 11, i.e. without the engine running. The drain-to-tank circuit 96 can include a gate valve 112.

The air bleed circuit 94 includes the air bleed passageway 72 and the regulator valve 80. When the engine is started-up, the pressure developed in the filter assembly 10 opens the regulator valve 80 to let the air bleed through the air bleed passageway 72 to the fuel tank 67.

The air bleed circuit 94 obviates the need for a user to manually de-aerate the fuel system 11. Further, the fuel system 11 increases the life of the filter 12 by filtering only the fuel that is burned in the engine, and not the fuel that is returned to the fuel tank 67.

The present invention may be embodied in other specific forms without departing from its spirit or essential characteristics. The described embodiments are to be considered in all respects only as illustrative and not restrictive. The scope of the invention is, therefore, indicated by the appended claims rather than by the foregoing description. All changes that come within the meaning and range of equivalency of the claims are to be embraced within their scope.

## Claims

1. A filter assembly for a standpipe having an opening for the introduction of filtered fluid into the standpipe, comprising:
a filter having a filter element in fluid communication with the opening, the filter being configured to seal fluid from the opening of the standpipe except fluid flowing through the filter element; and
a valve assembly biased by a spring against a first surface of the filter, the valve assembly having a seal on a surface facing the standpipe;
wherein as the filter is displaced, the valve assembly displaces along the standpipe under bias of the spring until the seal of the valve assembly seals the opening.

2. The filter assembly of claim 1 wherein the standpipe defines an axis "A", and the filter is removed by displacing the filter parallel to axis "A" away from the valve assembly.

3. The filter assembly of claim 1 wherein the filter is generally cylindrical and includes a center tube configured to generally circumscribe the standpipe, and the filter element is disposed around the center tube.

4. The filter assembly of claim 1 further comprising a housing having an first portion and a second portion, wherein the standpipe sealingly contacts the second portion of the housing, and a cap is threadably received by the first portion to form a chamber between the housing and the filter.

5. The filter assembly of claim 4 wherein the cap contacts a first plate of the filter, and the valve assembly contacts a second plate of the filter and biases the filter along axis "A" of the standpipe and into engagement with the cap.

6. The filter assembly of claim 1 wherein the valve assembly includes a component generally parallel with and sealingly contacting the standpipe with the seal.

7. The filter assembly of claim 1 wherein when the filter is disposed around the standpipe for filtering fuel introduced to the opening, the valve assembly comprises:
a valve member having a first component sealingly contacting the second portion of the housing, a second component extending generally perpendicular to the first component, a third component in engagement with the first surface of the filter and generally perpendicular to the second component, and a fourth component generally parallel with and sealingly contacting the standpipe.

8. The filter assembly of claim 7 wherein the spring is disposed between the second component and the fourth component, and generally circumscribes the standpipe.

9. The filter assembly of claim 1 wherein the spring is biased against an apron of the standpipe.

10. The filter assembly of claim 1 wherein when the valve assembly is displaced out of sealing engagement with a second portion of a housing, a passage in the second portion is opened to allow fluid to drain out of a chamber formed by the housing.

11. The filter assembly of claim 10 wherein the fluid flows through the passage and out an outlet of the filter assembly to return to a tank.

12. The filter assembly of claim 1 further comprising a housing having an first portion and a second portion, wherein the first portion includes an air bleed orifice in fluid communication with an air bleed passageway.

13. The filter assembly of claim 12 wherein the air bleed orifice is formed by an internal cap surface and a distal surface of an inner housing member, and the air bleed passageway is formed between the inner housing member and an outer housing member.

14. The filter assembly of claim 12 further comprising a regulator valve that is biased with a spring against the housing.

15. The filter assembly of claim 1 wherein when the filter is displaced from the openings, no fluid is permitted to flow to the openings.

16. A housing of a filter assembly for encapsulating a filter disposed on a standpipe, comprising:
a first portion generally circumscribing the filter;
a cap attached to a first end of the first portion; and
a second portion forming a second end of the first portion;
wherein the first portion forms an air bleed orifice in fluid communication with an air bleed passageway disposed in the first portion, wherein the air bleed passageway is in fluid communication with an outlet of the housing.

17. The housing of claim 16 wherein the air bleed orifice is formed by an internal surface of the cap and a distal surface of an inner housing member, and the air bleed passageway is formed between the inner housing member and an outer housing member.

18. The housing of claim 16 further comprising a regulator valve biased by a spring against the inner housing member and the outer housing member to seal the air bleed passageway.

19. The housing of claim 16 wherein the regulator valve includes a plate and a seal integrally formed with or attached to a first surface of the plate.

20. A filter assembly for a filter disposed on a standpipe in fluid communication with an engine, comprising:
a housing forming a chamber around the filter;
an inlet check valve disposed at an inlet of the housing and in fluid communication with the chamber; and
a regulator valve disposed in fluid communication with the chamber and an outlet of the housing;
wherein the inlet check valve and the regulator valve maintain a positive pressure inside the chamber when the engine is not running.

21. A fuel system for a vehicle having a fuel tank, an engine, and a filter assembly having a filter, comprising:
a fuel supply circuit configured for delivering fuel from the fuel tank to the filter assembly, and from the filter assembly to the engine;
a fuel return circuit configured for returning fuel from the fuel tank to the filter assembly when the pressure in the system is above a predetermined amount; and
a drain-to-tank circuit configured for draining fuel from the filter assembly to the fuel tank when the filter is removed from the filter assembly.

22. The fuel system of claim 21 further comprising an air bleed circuit configured for deaerating the fuel system when the engine is started.
